(19)

Europäisches
Patentamt
European
Patent Office
Office européen
des brevets

(11) **EP 3 299 845 A1**

(12) **EUROPÄISCHE PATENTANMELDUNG**

(43) Veröffentlichungstag:
**28.03.2018   Patentblatt 2018/13**

(21) Anmeldenummer: **17186666.8**

(22) Anmeldetag: **17.08.2017**

(51) Int Cl.:
*G01S 15/93* (2006.01)          *G01S 7/539* (2006.01)
*G01S 15/58* (2006.01)          *G01S 15/66* (2006.01)
*G01S 15/87* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **21.09.2016   DE 102016218093**

(71) Anmelder: **Robert Bosch GmbH**
**70442 Stuttgart (DE)**

(72) Erfinder:
• **Schmidt, Juergen**
  **71106 Magstadt (DE)**
• **Urban, Werner**
  **71665 Vaihingen/Enz (DE)**
• **Reimann, Tom**
  **73266 Bissingen An Der Teck (DE)**
• **Wang, Jianda**
  **52072 Aachen (DE)**

(54) **BETRIEBSVERFAHREN FÜR EIN ULTRASCHALLSENSORSYSTEM, STEUEREINRICHTUNG, ULTRASCHALLSENSORSYSTEM UND FAHRZEUG**

(57)    Die vorliegende Erfindung betrifft ein Betriebsverfahren für ein Ultraschallsensorsystem (10) zur Erfassung bewegter Objekte in einer Umgebung (2), insbesondere eines Fahrzeugs (1), mittels Ultraschall, mit Schritten des Aussendens von Ultraschallsignalen (20) zu einer Mehrzahl aufeinanderfolgender Zeitpunkte und des Empfangens von - insbesondere an einem oder an mehreren Objekten (3) in der Umgebung (2) - reflektierten Ultraschallechosignalen (30), wobei einem - zu einem ausgesandten Ultraschallsignal (20) - empfangenen Ultraschallechosignal (30) eine Spur (31) zugeordnet wird, insbesondere eine gemessene Schallintensität als Funktion der Zeit, in einer jeweiligen Spur (31) zu einem jeweils vorhandenen Ultraschallecho (32) ein Distanzwert (33) bestimmt und zugeordnet wird, Ultraschallechos (32) in Spuren (31) zu einer Mehrzahl zeitlich aufeinanderfolgender Ultraschallsignale (20) zu einer Gruppe (35) zusammengefasst werden, falls die Distanzwerte der Ultraschallechos (32) einer vorbestimmten Gesetzmäßigkeit folgen, und Ultraschallechos (36), die zu keiner Gruppe (35) gehören, als Störung (34) klassifiziert werden.

## Fig. 1A

EP 3 299 845 A1

# Fig. 1B

**Beschreibung**

Stand der Technik

Die vorliegende Erfindung betrifft ein Betriebsverfahren für ein Ultraschallsensorsystem zur Erfassung bewegter Objekte in einer Umgebung, insbesondere eines Fahrzeugs, mittels Ultraschall, eine Steuereinrichtung zum Steuern des Betriebs eines Ultraschallsensorsystems, ein Ultraschallsensorsystem als solches sowie ein Fahrzeug, welches mit einem Ultraschallsensorsystem ausgestattet ist.

Im Bereich der Fahr- und Parkassistenzsysteme für Fahrzeuge finden Ultraschallsensorsysteme zur Erfassung der Fahrzeugumgebung weite Verbreitung. Problematisch bei herkömmlichen Ultraschallsensorsystemen ist deren Störanfälligkeit gegenüber schlecht reflektierenden Objekten und/oder gegenüber Objekten in Bewegung. Insbesondere ist beim herkömmlichen Vorgehen bei bewegten Objekten nicht möglich, die gegensätzlichen Anforderungen im Hinblick auf die Auflösung der Umgebung einerseits und das Vermögen, wandernde Reflexionspunkte an sich bewegenden Objekten detektieren zu können, andererseits miteinander ausreichend zu vereinen.

Offenbarung der Erfindung

Das erfindungsgemäße Betriebsverfahren für ein Ultraschallsensorsystem mit den Merkmalen des unabhängigen Anspruches 1 weist demgegenüber den Vorteil auf, dass ohne strukturellen und/oder konstruktiven Mehraufwand und ohne Nachteile für die Auflösung der Umgebung eine verbesserte Detektionsleistung im Hinblick auf bewegte Objekte in einer Umgebung erzielt wird. Dies wird erfindungsgemäß dadurch erreicht, dass ein Betriebsverfahren für ein Ultraschallsensorsystem zur Erfassung bewegter Objekte in einer Umgebung und insbesondere eines Fahrzeugs mittels Ultraschall geschaffen wird, welches die Schritte des Aussendens von Ultraschallsignalen zu einer Mehrzahl aufeinanderfolgender Zeitpunkte und des Empfangens von - insbesondere an einem oder an mehreren Objekten in der Umgebung - reflektierten Ultraschallechosignalen aufweist. Dabei wird einem - zu einem ausgesandten Ultraschallsignal - empfangenen Ultraschallechosignal eine Spur zugeordnet, insbesondere nach Art einer gemessenen Schallintensität als Funktion der Zeit. Ferner wird in einer jeweiligen Spur zu einem jeweils vorhandenen Ultraschallecho ein Distanzwert bestimmt und zugeordnet. Es werden Ultraschallechos in Spuren zu einer Mehrzahl zeitlich aufeinanderfolgender Ultraschallsignale oder Ultraschallpulse zu einer Gruppe zusammengefasst, falls die Distanzwerte der Ultraschallechos einer vorbestimmten Gesetzmäßigkeit folgen. Ferner werden Ultraschallechos, die zu keiner Gruppe gehören, also der vorbestimmten Gesetzmäßigkeit nicht folgen, als Störung klassifiziert. Erfindungsgemäß werden also Ultraschallechos zu zeitlich aufeinanderfolgenden Ultraschallpulsen, die in ihrem zeitlichen Verlauf oder in ihrer zeitlichen Abfolge in Relation zu den sie erzeugenden aufeinanderfolgenden Ultraschallpulsen der vorbestimmten Gesetzmäßigkeit nicht genügen, als Störung verworfen, wogegen Ultraschallechos zu aufeinanderfolgenden Ultraschallpulsen, die auf Grund der vorgegebenen Gesetzmäßigkeit in ihrem zeitlichen Verlauf zu einer Gruppe klassifiziert werden können, als von einem Objekt in der Umgebung stammend klassifiziert werden.

Die Unteransprüche zeigen bevorzugte Weiterbildungen der Erfindung.

Dem erfindungsgemäßen Betriebsverfahren liegt in der oben dargestellten Form mit dem Klassifizieren empfangener oder einlaufender Ultraschallechosignale zu Gruppen, um etwaige Objekte von Störungen zu trennen, ein zeitliches Verfolgen von Ultraschallechos, welche zu zeitlich aufeinanderfolgenden Ultraschallsignalen oder Sendepulsen eines Ultraschallsignals und zu einem festen Objekt gehören, zu Grunde. Dieses Nachverfolgen von Ultraschallechos wird im Sinne der vorliegenden Erfindung auch als Echotracing oder als Echotracingverfahren bezeichnet.

Dieses Echotracingverfahren ist ein Kernelement des erfindungsgemäßen Betriebsverfahrens für ein Ultraschallsensorsystem.

Gemäß einer bevorzugten Ausführungsform des erfindungsgemäßen Betriebsverfahrens werden Direktechos von mindestens zwei Ultraschallsendeempfängern eines zu Grunde liegenden Ultraschallsensorsystems bei der Erkennung von Objekten verwendet.

Zusätzlich oder alternativ können ein oder mehrere Kreuzechos von mindestens zwei Ultraschallsendeempfängern des zu Grunde liegenden Ultraschallsensorsystems bei der Erkennung von Objekten verwendet werden.

Ferner kann einer jeweils ermittelten Gruppe ein Objekt und/oder mithin ein Fangfenster zugeordnet werden, also insbesondere ein Zeitbereich mit bestimmter Weite, in welchem entlang der Spur eines empfangenen oder einlaufenden Ultraschallechosignals nach einer Gruppe zuordenbaren weiteren Ultraschallechos gesucht wird.

In einem jeweiligen Fangfenster können etwaig nachfolgend eingehende Ultraschallechos detektiert und der jeweiligen Gruppe und mithin dem jeweils zugeordneten Objekt zugeordnet werden, zum Beispiel auch, um das jeweilige Objekt in Lage und/oder Bewegungszustand zu verifizieren.

Bei einer anderen Weiterbildung des erfindungsgemäßen Betriebsverfahrens ist es vorgesehen, dass zu jeweils einem Direktecho und einem Kreuzecho eines Paares von Ultraschallsendeempfängern eine Gruppe oder eine Trace erzeugt wird, welcher insbesondere eine Identitätsmarke zugeordnet wird.

Beim Empfangen oder Einlaufen eines neuen Ultraschallechos und beim Neudetektieren eines Objekts in einer vorhandenen Gruppe oder einer Trace kann nach Übereinstimmung und insbesondere nach einer übereinstimmenden Identitätsmarke gesucht werden.

Aus einer Kombination von Direktechos mit einem Kreuzecho eines gegebenen Paares von Ultraschallsendeempfängern kann eine Typklassifikation, zum Beispiel hinsichtlich des Vorliegens einer Wand oder eines Punkts durchgeführt werden.

Beim Vorliegen einer übereinstimmenden Identitätsmarke beim Empfangen oder Einlaufen eines neuen Ultraschallechos und dem Neudetektieren eines Objekts in einer Gruppe kann eine Typklassifikation hinsichtlich des Vorliegens einer Wand oder eines Punkts erneut durchgeführt werden.

Aus Daten einer Typklassifikation hinsichtlich des Vorliegens einer Wand oder eines Punkts und/oder aus den Daten einer erneuten Durchführung einer Typklassifikation kann Bewegungsinformation zu einem Bewegungszustand eines Objekts ermittelt werden, insbesondere durch Erzeugen eines Bewegungsvektors und/oder eines Werts einer Bewegungsgeschwindigkeit.

Dabei kann die Bewegungsinformation zeitlich aufeinanderfolgend erneut erzeugt und insbesondere unter Verwendung einer Tiefpassfiltereinheit zeitlich stabilisiert werden.

Bei einer anderen Weiterbildung des erfindungsgemäßen Betriebsverfahrens kann aus den empfangenen Echosignalen Bewegungsinformation zu einem Bewegungszustand eines detektierten Objekts ermittelt werden.

Auf der Grundlage der Bewegungsinformation können etwaige Fangfenster zu Objekten in Lage und/oder Weite angepasst werden.

Alternativ oder zusätzlich können aus den empfangenen Echosignalen Lage und/oder Bewegungsinformation zu einem Bewegungszustand eines bereits vorher detektierten Objekts verifiziert werden.

In Abhängigkeit vom Grad der Verifikation können Lage und/oder Weite eines jeweiligen Fangfensters ebenfalls angepasst werden.

Die nachfolgenden Aspekte betreffen Eigenschaften und Vorteile des dem erfindungsgemäßen Betriebsverfahrens zu Grunde liegenden Echotracingverfahrens:

Die Genauigkeit des erfindungsgemäßen Betriebsverfahrens lässt sich steigern, wenn gemäß einer bevorzugten Ausgestaltungsform ein jeweiliger Distanzwert unter Berücksichtigung einer Eigenbewegung eines zu Grunde liegenden Ultraschallsenders des Ultraschallsensorsystems und insbesondere des mit dem Ultraschallsensorsystem ausgestatteten zu Grunde liegenden Fahrzeugs bestimmt oder ermittelt wird.

Grundsätzlich lassen sich sämtliche Gesetzmäßigkeiten zur Bewertung der Distanzwerte zu den jeweiligen Ultraschallechos zur Auswertung heranziehen.

Dabei können aber insbesondere bestimmte Bewegungsmodelle herangezogen werden, die die Relativbewegung zwischen einem Fahrzeug, welches ein Ultraschallsensorsystem trägt, und den Objekten der Umgebung beschreiben.

Bei einer bevorzugten Ausgestaltungsform des erfindungsgemäßen Betriebsverfahrens ist es daher vorgesehen, dass die vorbestimmte Gesetzmäßigkeit definiert ist durch einen linearen Zusammenhang zwischen einem jeweiligen Distanzwert und einer vom Ultraschallsensorsystem und insbesondere vom zu Grunde liegenden Fahrzeug zurückgelegten Wegstrecke, insbesondere gemäß der nachfolgenden Gleichung (I)

$$\Delta d = a \cdot \Delta s , \qquad\qquad (I)$$

wobei $\Delta d$ die Differenz von Distanzwerten d zu verschiedenen Zeitpunkten oder Spuren, $\Delta s$ die Differenz der zurückgelegten Wegstrecke s zu diesen verschiedenen Zeitpunkten oder Spuren und a eine Konstante bezeichnen, insbesondere beim Vorliegen von mindestens zwei Ultraschallechos in einer Gruppe und/oder in einer Spur.

Alternativ oder zusätzlich kann es vorgesehen sein, dass die vorbestimmte Gesetzmäßigkeit definiert ist durch einen quadratischen Zusammenhang zwischen einem jeweiligen Distanzwert und einer vom Ultraschallsensorsystem und insbesondere vom zu Grunde liegenden Fahrzeug zurückgelegten Wegstrecke, insbesondere gemäß der nachfolgenden Gleichung (II)

$$d^2 = \left(s - s_0\right)^2 + d_0{}^2 , \qquad\qquad (II)$$

wobei d den Distanzwert, do einen minimalen Abstand zu einem Objekt, s die zurückgelegte Wegstrecke und $s_0$ die zurückgelegte Wegstrecke zu einem Zeitpunkt des Passierens des Objekts bezeichnen, insbesondere beim Vorliegen von mehr als zwei Ultraschallechos in einer Gruppe und/oder in einer Spur.

Die oben beschriebenen Zusammenhänge (I) und (II) sind insbesondere geeignet für im Wesentlichen statische Umgebungen mit sich nicht oder nur sehr langsam bewegenden Objekten. Beim Auftreten von sich vergleichsweise schnell oder sich abrupt bewegenden Objekten, zum Beispiel von Fußgängern mit Geschwindigkeitsänderung und/oder Richtungsänderung, können die Auswertemechanismen, die auf den Zusammenhängen (I) und (II) beruhen, nicht ausreichend sein.

Unter derartig besonderen Umständen können neben diesen konkreten Zusammenhängen mit Bezugnahme auf geometrische Aspekte zwischen Ultraschallsensorsystem und Objekten der Umgebung andere und allgemeinere Zusammenhänge bei der Bewertung der Ultraschallechos von Vorteil sein.

So ist es bei einer anderen Ausgestaltungsform des erfindungsgemäßen Betriebsverfahrens - gerade im Zusammenhang mit sich bewegenden Objekten - vorgesehen, dass die vorbestimmte Gesetzmäßigkeit definiert ist durch einen Korrelationszusammenhang von Ultraschallechos und/oder durch eine Ähnlichkeit der Reflexion oder Reflexivität im Zusammenhang mit Ultraschallechos.

Zusätzlich oder alternativ kann die vorbestimmte Gesetzmäßigkeit definiert sein durch einen Korrelationszusammenhang von Ultraschallechos über eine Filterfunktion, insbesondere auf der Grundlage eines diskreten Kalmanfilters und/oder beim Vorliegen von mehr als zwei Ultraschallechos in einer Spur.

Wichtig für das erfindungsgemäße Betriebsverfahren ist die Vergleichbarkeit der Merkmale in den einzelnen Spuren der Ultraschallechosignale, die zu zeitlich unterschiedlichen Ultraschallsignalen als Sendesignalen gehören, um deren Gruppierung und zeitlichen Verlauf zu gewährleisten.

So ist es gemäß einer anderen vorteilhaften Weiterbildung des erfindungsgemäßen Betriebsverfahrens vorgesehen, dass zur Bewertung jeweiliger Echosignale, Spuren, Ultraschallechos, Distanzwerte und/oder Gruppen von Ultraschallechos, insbesondere zu verschiedenen Zeitpunkten und/oder zu verschiedenen Sendepulsen des zu Grunde liegenden Ultraschallsignals, ein Fangfenster definiert und verwendet wird.

Beim Auftreten mehrerer Kandidaten für Ultraschallechos, die in einer Spur zu einem empfangenen Ultraschallechosignal einer gegebenen Gruppe hinzugefügt werden können, ist die entsprechende Auswahl von besonderer Relevanz. Dabei können verschiedene Kriterien zu Rate gezogen werden.

Bei einer vorteilhaften Ausführungsform des erfindungsgemäßen Betriebsverfahrens ist es daher vorgesehen, dass in einer Spur eines empfangenen Ultraschallechosignals zu einem später ausgesandten Ultraschallsignal oder Sendepuls, insbesondere unter Einbeziehung einer Eigenbewegung des zu Grunde liegenden Ultraschallsensorsystems und/oder des zu Grunde liegenden Fahrzeugs, in einem Fangfenster nach möglichen Ultraschallechos gesucht wird, welche Ultraschallechos in einer Spur eines empfangenen Ultraschallechosignals zu einem früher ausgesandten Ultraschallsignal oder Sendepuls bestätigen, wobei insbesondere ein Ultraschallecho bestimmt und verwendet wird, welches dem vorangehenden Ultraschallecho am nächsten kommt.

Alternativ oder zusätzlich kann es vorgesehen sein, dass zur Bewertung einer Spur eines empfangenen Ultraschallechosignals zu einem später ausgesandten Ultraschallsignal oder Sendepuls für den späteren Zeitpunkt ein bereits definiertes Fangfenster verwendet wird, um unter Verwendung der vorbestimmten Gesetzmäßigkeit für eine gegebene Gruppe für den späteren Zeitpunkt eine Lage eines zukünftigen Ultraschallechos vorherzusagen, und dasjenige Ultraschallecho in der Spur des Ultraschallechosignals zum späteren Zeitpunkt zur jeweiligen Gruppe hinzugefügt wird, welches der vorhergesagten Lage des zukünftigen Ultraschallechos am nächsten kommt.

Bei dem erfindungsgemäßen Vorgehen kann für die betreffende Wahl die Breite oder Weite des Fangfensters von maßgeblicher Bedeutung sein.

Entsprechend kann bei bestimmten Ausführungsformen das Fangfenster eine festgesetzte Weite aufweisen.

Bei anderen Anwendungen kann aber ein variabel anpassbares Fangfenster ausgebildet sein.

So ist es gemäß einer Weiterbildung des erfindungsgemäßen Betriebsverfahrens alternativ oder zusätzlich vorgesehen, dass ein jeweiliges Fangfenster über einen Tiefpassfilter an eine mittlere Abweichung zwischen einer vorhergesagten Lage eines zukünftigen Ultraschallechos und einer tatsächlichen Lage eines in eine Gruppe aufgenommenen Ultraschallechos einer Spur eines Ultraschallechosignals angepasst wird.

Dabei kann unter einer Gruppe vorangehend und nachfolgend im Sinne der vorliegenden Erfindung auch eine so genannte "Trace" verstanden werden. Es handelt sich dabei jeweils um eine Zusammenfassung von Ultraschallechos in Echosignalen oder Empfangssignalen zu zeitlich voneinander beabstandeten Ultraschallsignalen als Sendesignalen oder zu deren zeitlich beabstandeten Pulsen als Sendepulse. Auf jeden Fall ist für eine entsprechende Zusammenfassung der Echosignale zu einer Gruppe oder Trace erfindungsgemäß die jeweils zu Grunde gelegte vorbestimmte Gesetzmäßigkeit maßgeblich.

Ferner betrifft die vorliegende Erfindung eine Steuervorrichtung zum Steuern des Betriebs eines Ultraschallsensorsystems, insbesondere zur Erfassung der Umgebung eines Fahrzeugs mittels Ultraschall.

Die erfindungsgemäße Steuereinrichtung ist zur Ausführung des erfindungsgemäßen Betriebsverfahrens ausgebildet und weist dazu entsprechende Mittel auf.

Ferner ist Gegenstand der vorliegenden Erfindung ein Ultraschallsystem, insbesondere zur Erfassung der Umgebung eines Fahrzeugs mittels Ultraschall.

Das erfindungsgemäße Ultraschallsystem weist einen Ultraschallsender zur Erzeugung und zum Aussenden von Ultraschallsignalen, insbesondere in Pulsform, und einen Ultraschallempfänger zum Empfangen von Ultraschallechosignalen und insbesondere von an einem oder an mehreren Objekten in der Umgebung reflektierten Ultraschallsignalen auf.

Gemäß der vorliegenden Erfindung weist das Sensorsystem des Weiteren eine Steuereinrichtung auf, die erfindungsgemäß ausgebildet ist und dazu dient, den Betrieb des Ultraschallsensorsystems, insbesondere gemäß dem erfindungsgemäßen Betriebsverfahren, zu steuern.

Gemäß einem weiteren Aspekt der vorliegenden Erfindung wird ein mit dem erfindungsgemäßen Ultraschallsensorsystem ausgestattetes Fahrzeug geschaffen.

Kurzbeschreibung der Figuren

Unter Bezugnahme auf die beigefügten Figuren werden Ausführungsformen der Erfindung im Detail beschrieben.

Figur 1A    zeigt in schematischer Form ein erfindungsgemäß ausgestaltetes Fahrzeug unter Verwendung einer Ausführungsform des erfindungsgemäßen Ultraschallsensorsystems, welches auf der Grundlage des vorgestellten Betriebsverfahrens steuerbar ist.

Figur 1 B    zeigt in schematischer Form eine Anordnung eines erfindungsgemäßen Ultraschallsensorsystems zum Empfang eines Direktechos.

Figur 2    zeigt nach Art eines Graphen Signale, die der Bewertung beim erfindungsgemäßen Betriebsverfahren zu Grunde gelegt sowie bei der Auswertung abgeleitet werden können.

Figur 3    zeigt in schematischer Form geometrische Aspekte, die der Bewertung durch eine Ausführungsform des erfindungsgemäßen Betriebsverfahrens zu Grunde gelegt werden können.

Figur 4    zeigt in schematischer Form ein erfindungsgemäß ausgestaltetes Fahrzeug unter Verwendung einer Ausführungsform des erfindungsgemäßen Verfahrens zum Detektieren bewegter Objekte.

Bevorzugte Ausführungsformen der Erfindung

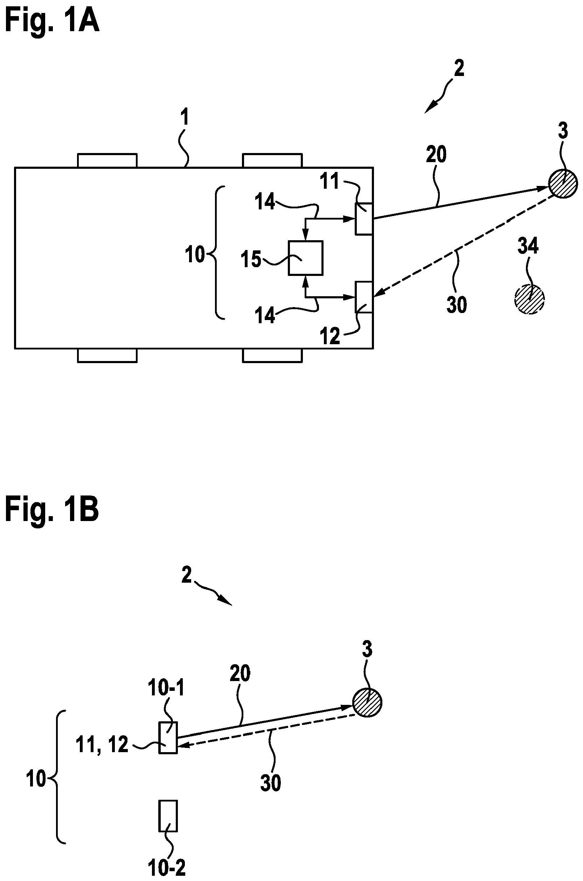

Nachfolgend werden unter Bezugnahme auf die Figuren 1A bis 4 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt in schematischer Draufsicht ein erfindungsgemäß ausgestaltetes Fahrzeug 1, z.B. nach Art eines Personenkraftwagens, welches mit einer Ausführungsform des erfindungsgemäßen Ultraschallsensorsystems 10 ausgebildet ist.

Das Ultraschallsensorsystem 10 gemäß der vorliegenden Erfindung kann z.B. einen Ultraschallsender 11, einen Ultraschallempfänger 12 und eine Steuereinrichtung 15 zum Steuern des Betriebs des Ultraschallsensorsystems 10 aufweisen.

Es können auch mehrere Ultraschallsender 11 und/oder mehrere Ultraschallempfänger 12 ausgebildet sein.

Die Funktionen eines Ultraschallsenders 11 und eines Ultraschallempfänger 12 können auch in einem einzigen Element - in Figur 1A durch die Ultraschallsendeempfänger 10-1 und 10-2 dargestellt - vereint sein. Jeder der Ultraschallsendeempfänger 10-1 und 10-2, die auch als Sensor 10-1 bzw. 10-2 angesprochen werden können, kann somit je nach Ansteuerung In der Darstellung gemäß Figur 1A die Funktion eines Ultraschallsenders 11 oder die Funktion eines Ultraschallempfänger 12 übernehmen. Dies ist jedoch nicht zwingend, vielmehr können die Funktionen des Sendens und des Empfangens auch durch räumlich getrennte Elemente verwirklicht werden.

Über ein oder mehrere Erfassungs- und Steuerleitungen 14 sind die Steuereinrichtung 15 und der eine oder die mehreren Ultraschallsender 11 und/oder der eine oder die mehreren Ultraschallempfänger 12 miteinander verbunden.

Auf diese Weise kann die Steuereinrichtung 15 jeweils den Betrieb der Sender 11 und der Empfänger 12 steuern und/oder deren Status abfragen bzw. entsprechende Daten oder Signale von den Sendern 11 und/oder den Empfängern 12 empfangen oder aktiv abrufen.

Die Steuereinrichtung 15 ist ausgebildet und weist Mittel auf, die sowohl den Betrieb des Sendens über die Ultraschallsender 11 als auch den Empfang über die Ultraschallempfänger 12 in der erfindungsgemäßen Art und Weise ermöglichen.

Dazu können entsprechende Mittel zum Speichern, Verarbeiten und Bewerten empfangener Signale vorgesehen sein, die hier im Detail nicht dargestellt sind.

In der Darstellung gemäß Figur 1A wird erläutert, dass der erste Ultraschallsendeempfänger 10-1 in der in Figur 1A dargestellten Situation als Ultraschallsensor 11 fungiert und somit ein Ultraschallsignal 20 als Sendesignal aussendet. Des Weiteren fungiert gemäß der Darstellung der Figur 1A der zweite Ultraschallsendeempfänger 10-2 als Ultraschallempfänger 12 zum Empfang des Echosignals 30. In der in Figur 1A dargestellten Konfiguration wird somit mit dem Echosignal 30 ein so genanntes Kreuzecho ermittelt, bei welchem eben ein erster Sendeempfänger 10-1 das Ultraschallsignal 20 aussendet ein zweiter Sendeempfänger 10-2 des Echosignal 30 empfängt.

Demgegenüber wird gemäß Figur 1B der erste Ultraschallsendeempfänger 10-1 in einem ersten Zeitraum als Ultraschallsender 11 zur Aussendung des Ultraschallsignals 20 betrieben wogegen in einem zeitlich nachfolgenden zweiten Zeitraum dieser erste Ultraschallsendeempfänger 10-1 als Ultraschallempfänger 12 betrieben wird um das Echosignal 30 als Direktecho zu empfangen.

In den nachfolgenden Darstellungen wird, sofern nichts anderes gesagt ist, immer davon ausgegangen, dass ein jeweiliges Element als Ultraschallsendeempfänger ausgebildet ist und sowohl die Funktion eines Ultraschallsenders 11 als auch die Funktion eines Ultraschallempfänger 12 ausüben kann.

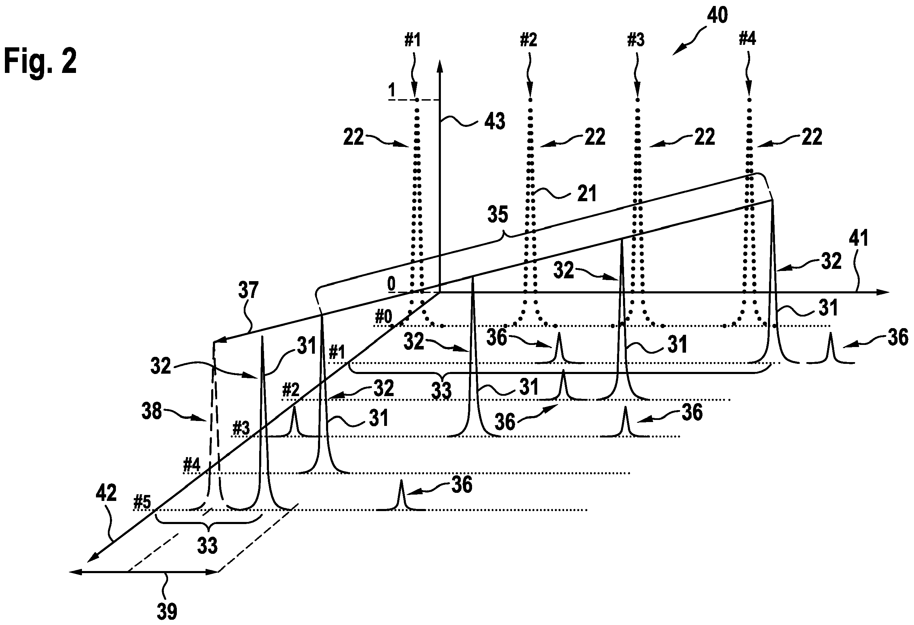

Figur 2 zeigt nach Art eines dreidimensionalen Graphen 40 eine typische Messsituation, wie sie beim erfindungsgemäßen Betriebsverfahren für ein Ultraschallsensorsystem 10 zu Grunde gelegt werden kann.

Im Graphen 40 ist entlang einer ersten Abszisse 41 (x-Achse) die Messzeit aufgetragen.

Entlang der zweiten Abszisse 42 (y-Achse) wird gemäß der mit einem Ultraschallsignal 20 als Sendesignal im Zusammenhang stehenden einzelnen Pulsen oder Sendepulsen 22 durchnummeriert, und zwar aufeinanderfolgend mit #1, #2 usw.

An der Ordinate 43 sind die relativen Ultraschallintensitäten auf den Wert 1 normiert aufgetragen.

Bei dem auf der zweiten Abszisse 42 beim Wert 0 dargestellten Spur 21 handelt es sich also um ein Ultraschallsignal 20 als Sendesignal mit einer Mehrzahl von einzelnen Pulsen oder Sendepulsen 22, die zeitlich äquidistant, also mit konstantem zeitlichen Abstand relativ zueinander aufeinanderfolgend durch einen Ultraschallsender 11 eines Ultraschallsensorsystems 10 ausgesandt werden.

Der Einfachheit halber wird in der Umgebung 2 des Fahrzeugs 1 vom Vorhandensein eines einzigen Objekts 3 ausgegangen.

Die einzelnen Sendepulse 22 sind mit #1, #2, ... durchnummeriert.

Entsprechend den zeitlich aufeinanderfolgenden Sendepulsen 22 des Ultraschallsignals 20 als Sendesignal empfängt ein Ultraschallempfänger 12 des erfindungsgemäßen Ultraschallsensorsystems 10 ein entsprechendes Echosignal 30 als Empfangssignal, jeweils mit einer Mehrzahl von Ultraschallechos 32 und 36.

Die Spuren 31 des zu einem jeweiligen Sendepuls 22 gehörigen Echosignals 30, welches jeweils durch den Ultraschallempfänger 12 empfangen wird, sind entlang der zweiten Abszisse 42 aufsteigend mit den Nummern 1, 2, ..., aufeinanderfolgend durchnummeriert.

Die jeweiligen Spuren 31 weisen mehrere Ultraschallechos 32 und 36 auf.

Zur besseren Kenntlichmachung besitzen die eigentlichen Ultraschallechos 32 eine vergleichsweise hohe Amplitude, wogegen die weiteren Ultraschallechos 36 eine vergleichsweise niedrige Amplitude besitzen. Dadurch soll betont werden, dass die Ultraschallechos 32 von einem Objekt 3 in der Umgebung 2, die Echos 36 dagegen von einer Störung 34 herrühren.

Mit zunehmender Ordnung #1, #2, ... der zu den aufeinanderfolgenden Sendepulsen 22 - ebenfalls durchnummeriert mit #1, #2, ... - also mit zunehmender Sendezeit für die Sendepulse 22 die zugehörigen Ultraschallechos 32, welche zum Objekt 3 in der Umgebung 2 gehören, näher an die zweite Abszisse 42 heranreichen, entsprechend einem sich mit verstreichender Zeit verringerndem Distanzwert 33. Der Distanzwert 33 ist in diesem Fall gerade repräsentativ für den zeitlichen Abstand des jeweiligen Ultraschallechos 32 von der zweiten Abszisse 42 und entsprechend repräsentativ für die Laufzeit des reflektierten Signals, also des Ultraschallechos 32 vom reflektierendem Objekt 3 bis zum Ultraschallempfänger 12.

Dies bedeutet im Umkehrschluss, dass sich der räumliche Abstand zwischen dem Ultraschallsensorsystem 10, also dem Fahrzeug 1, und dem Objekt 3 in der Umgebung 2 zeitlich ändert, das Objekt 3 und das Fahrzeug 1 bewegen sich relativ zueinander.

Erfindungsgemäß wird nun aus der Mehrzahl der Spuren 31 korrespondierend zu den einzelnen Sendeimpulsen 22 und durchnummeriert mit #1, #2, ..., eine Zuordnung der Ultraschallechos 32 zu einer Gruppe 35 durchgeführt.

Dazu werden die Empfangszeiten, zeitlichen Positionen oder Lagen der mit #1, #2, ..., durchnummerierten Ultraschallechos 32 auf der Grundlage einer vorbestimmten Gesetzmäßigkeit bewertet.

Die Zugehörigkeit der Ultraschallpulse 32, Gruppe 35, wird in Figur 2 durch die Koinzidenzlinie 37 angedeutet, die auch als Trace 37 bezeichnet wird und als Übereinstimmungsmerkmal in Bezug auf die Lage der Ultraschallechos 32 dient. Statt einer Linie kann auch ein Intervall mit einer gewissen Streubreite verwendet werden.

Wie oben bereits im Detail dargelegt wurde, wird unter einer Gruppe 35 und unter einer Trace 37 synonym jeweils eine Zusammenfassung von Ultraschallechos in Echosignalen oder Empfangssignalen zu zeitlich voneinander beabstandeten Ultraschallsignalen als Sendesignalen oder zu deren zeitlich beabstandeten Pulsen als Sendepulse verstanden, wobei jeweils die zu Grunde gelegte vorbestimmte Gesetzmäßigkeit maßgeblich ist.

Ausgehend von der so erzeugten Gruppe 35 oder Trace 37 und der zu Grunde gelegten vorbestimmten Gesetzmäßigkeit kann dann für zukünftige Folgesignale

- also für in der Zukunft liegende weitere Sendepuls 22 des Ultraschallsignals 20
- ein zukünftiges Ultraschallecho 38 vorhergesagt werden.

Trifft dann, durch einen weiteren Sendepuls 22 angeregt, ein derartiges weiteres Ultraschallecho 32 - in der Figur mit der Nummer #5 versehen - ein, so kann innerhalb des Fangfensters 39, also des oben beschriebenen Koinzidenzintervalls 37 bzw. der Trace 37, festgestellt werden, ob die Lage des bei #5 vorliegenden neuen Ultraschallechos 32 auf der Grundlage der vorbestimmten Gesetzmäßigkeit sich noch in die Gruppe 35 der vorangehenden Ultraschallechos 32 eingliedern lässt oder nicht.

Zu bemerken ist noch, dass eine entsprechende Gesetzmäßigkeit für die weiteren Ultraschallechos 36 - hier mit kleinerer Amplitude - nicht gefunden werden kann, so dass diese zusätzlichen Ultraschallechos 36 als zu einer Störung 34 gehörig klassifiziert und bei der Objektbehandlung ausgeschlossen werden.

In Figur 2 weisen die Pulse 22 als Sendepulse des Ultraschallsignals 20 als Sendesignal einen konstanten zeitlichen Abstand zueinander auf. Üblicherweise wird dieser bei konkreten Anwendungen, gerade beim Vorliegen einer Mehrzahl von Ultraschallsendern/-empfängern so gewählt, dass unter Berücksichtigung der Schallgeschwindigkeit und der Dämpfung im jeweils relevanten Frequenzbereich kein zeitlicher Überlapp der Sendepulse 22 zueinander und in Bezug auf von etwaigen Objekten 3 einlaufenden Ultraschallechos 32 vorliegt. Dies bedeutet insbesondere, dass mit dem Aussenden eines Pulses 22 bei einem gegebenen Ultraschallsender 11 solange gewartet wird, bis sämtliche erwartbaren Ultraschallechos 32 zu vorangehenden Sendepulsen 22 sämtlicher Ultraschallsender 11 eingelaufen sind. Damit ergibt sich zum Beispiel ein Zeitfenster zwischen 10 ms und 140 ms zwischen aufeinanderfolgenden Sendepulsen 22 eines gegebenen Ultraschallsender 11, auch in Abhängigkeit von der Fahrgeschwindigkeit und/oder der Struktur der Umgebung. Der Einfachheit halber ist ihr Darstellung gemäß Figur 2 das Vermeiden eines derartigen zeitlichen Überlappens nicht realisiert, kann aber als grundsätzliche Maßnahme der vorliegenden Erfindung verwirklicht sein.

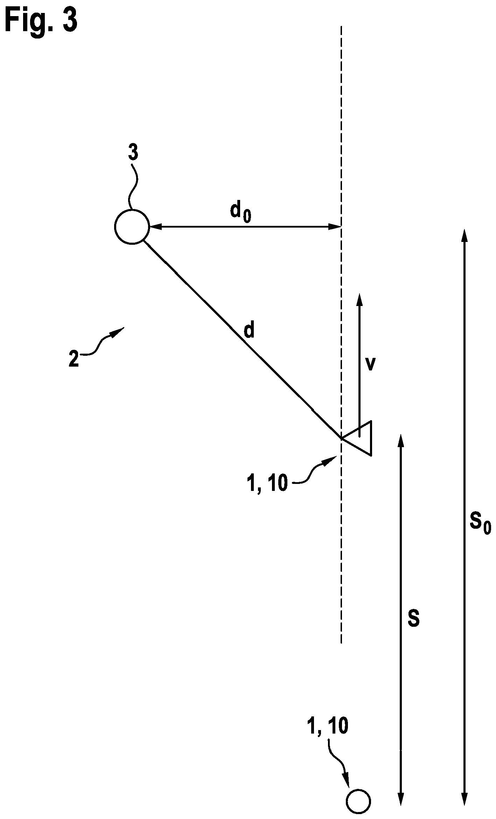

Figur 3 erläutert in schematischer Draufsicht die bei dem erfindungsgemäßen Betriebsverfahren zu Grunde liegenden geometrischen Verhältnisse.

Dabei werden mit d der Distanzwert, mit $d_0$ ein minimaler Abstand des zu Grunde liegenden Fahrzeugs 1 oder zumindest des Sendersystems 10 von einem Objekt 3, mit s eine zurückgelegte Wegstrecke und mit $s_0$ eine zurückgelegte Wegstrecke zu einem Zeitpunkt des Passierens des Fahrzeugs 1 oder des Ultraschallsensorsystems 10 am Objekt 3 bezeichnet.

Die so definierten Größen können der Bewertung durch die oben dargelegten Zusammenhänge (I) und (II) verwendet werden oder als Größen in einer Korrelationsanalyse, z.B. auf der Grundlage eines diskreten Kalmanfilters mit den unten weiter im Detail beschriebenen Beziehungen (III) bis (VI) eingehen.

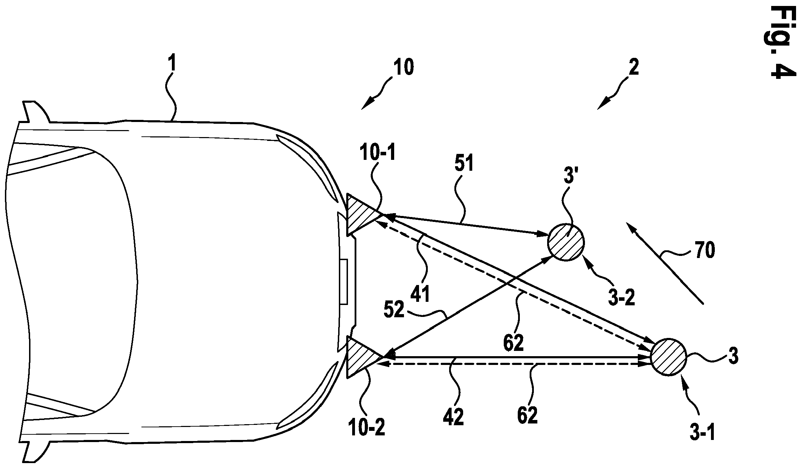

Figur 4 erläutert anhand einer schematischen Draufsicht Aspekte des erfindungsgemäßen Betriebsverfahrens für ein Ultraschallsensorsystem 10, welches an einem Fahrzeug 1 ausgebildet ist und welches insbesondere dazu dient, mit einem Paar erster und zweiter Ultraschallsendeempfänger 10-1 und 10-2, welche beide sowohl als Ultraschallsender 11 als auch als Ultraschallempfänger 12 fungieren können, des zu Grunde liegenden Ultraschallsensorsystems 10 ein Objekt 3 zu detektieren, welches sich in Bewegung befindet.

In der in Figur 4 dargestellten Situation befindet sich das Objekt 3 zu einem ersten und früheren Zeitpunkt an einer Position 3-1. Zu diesem Zeitpunkt und an dieser Position 3-1 werden von den ersten und zweiten Ultraschallsendeempfängern 10-1 und 10-2 jeweils Pulse 22 eines zu Grunde liegenden Ultraschallsignals 20 ausgesandt und entsprechende Echosignale 30 empfangen, so wie dies grundsätzlich in Figur 1B dargestellt ist, nämlich in Form von Direktechos 41 bzw. 42.

Zu einem späteren Zeitpunkt befindet sich das Objekt 3 an einer verschobenen Position 3-2 und ist dort mit 3' bezeichnet. Zu diesem Zeitpunkt werden von den ersten und zweiten Ultraschallsendeempfängern 10-1 und 10-2 ebenfalls Pulse 22 eines zu Grunde liegenden Ultraschallsignals 20 ausgesandt und entsprechende Echosignale 30 empfangen, nämlich in Form von Direktechos 51 bzw. 52.

Erfindungsgemäß können zusätzlich zu den Direktechos 41, 42; 51, 52 auch entsprechende Kreuzechos zu den zu den Positionen 3-1 und 3-2 gehörigen Zeitpunkten erfasst werden. In der Figur 4 ist zur besseren Übersicht nur ein einzelnes Kreuzecho 62 dargestellt, nämlich mit Aussendung am zweiten Ultraschallsendeempfänger 10-2 und mit Empfang am ersten Ultraschallsendeempfänger 10-1.

Aus der zeitlichen Abfolge der empfangenen Ultraschallsignale 20 mit Direktechos 41, 42; 51, 52 und Kreuzechos 62, deren Bewertung und Gruppierung in Gruppen 35 im Zusammenhang mit dem erfindungsgemäßen Echotracingverfahren der Bildung von Gruppen 35 oder Traces 37 Ultraschallechos 32 zu einem identifizierten Objekt 3 im Zusammenhang mit entsprechend variierbaren Fangfenstern 39 kann ein bewegtes Objekt 3 in der Umgebung 2 des Ultraschallsensorsystems 10 oder des Fahrzeugs 1 mit hoher Genauigkeit auch in dessen Bewegungszustand - gegeben durch ein Bewegungsvektor und/oder eine Bewegungsgeschwindigkeit 70 - bestimmt werden, um ein Fahr- und/oder Parkassistenzsystem zu unterstützen.

Diese und weitere Merkmale und Eigenschaften der vorliegenden Erfindung werden an Hand der folgenden Darlegungen weiter erläutert:

Für herkömmliche ultraschallbasierte Manövrier-, Fahr- und/oder Parkassistenzsysteme sind Fußgänger und andere bewegte Objekte problematisch.

Dies liegt an der mangelnden Reflektivität von Fußgängern je nach Kleidung und an der fehlenden oder mangelnden Winkelauflösung herkömmlicher Ultraschallsensoren. Hinzu kommen eine hohe Störanfälligkeit der Ultraschallsensoren und durch die Objektbewegung wechselnde Reflexionspunkte. Dies führt zu schwankenden Werten bei den Abstandsmessungen.

Bei herkömmlichen Parkassistenzsystemen könnte versucht werden, zeitlich aufeinander folgende Information zu dynamischen Objekte nach einer Objektbildung oder Objektdetektion zu vereinen. Dafür sind entsprechend große Fangfenster über den Datensätzen notwendig. Dies kann die Stabilität bei der Erkennung statischer Objekte in negativer Weise beeinflussen.

Derzeit besteht ein Trade-Off zwischen der Erkennung dynamischer Objekte einerseits und der Stabilität bei der Umfelderfassung im Hinblick auf statische Objekte und der Unterscheidung mehrerer und gleichzeitig auftretender dynamischer Objekte in einem Fangfenster beschränkter Größe andererseits.

Nach aktueller Parametrierung ist daher die Erkennung dynamischer Objekte herkömmlicherweise nur bis zu einer Objektgeschwindigkeit von etwa 4 km/h möglich. Dabei ist die Erkennung allerdings träge und instabil und hinkt der aktuellen Objektposition hinterher.

In einem Fahrzeug äußert sich dies durch eine flackernde Anzeige im Bereich der Schnittstelle (HMI : Mensch-Maschine-Schnittstelle) mit teilweise aussetzenden Anzeige- oder Displayzonen.

Für den Anwender ist ein derartiges Verhalten unbefriedigend.

Es ist somit ein Kernaspekt der vorliegenden Erfindung, bisherige Konzepte bei der ultraschallbasierten Erkennung dynamischer oder bewegte Objekte, insbesondere von Fußgängern, dadurch zu verbessern, dass bei ansonsten in etwa ähnlichem Aufbau für ein zu Grunde gelegtes Ultraschallsensorsystem ein neues Betriebsverfahren eingesetzt wird.

Das erfindungsgemäße Betriebsverfahren umfasst bei einer bevorzugten Ausführungsform neben (i) dem so genannten Echotracingverfahren als Grundkomponente zusätzlich (ii) ein neues Vorgehen - insbesondere nach Art eines Algorithmus' - beim Bewerten der Signale aus mindestens zwei Ultraschallsensoren.

Insbesondere der Einsatz beider neuer Komponenten des Echotracingverfahrens und des neuartigen Bewertungsverfahrens führen in Kombination miteinander zu vorteilhaften Ergebnissen bei der Erkennung und beim Nachverfolgen bewegter Objekte, insbesondere bei Fußgängern, wobei erfindungsgemäß auch die Umfelderkennung im Hinblick auf statische Objekte im Vergleich zum herkömmlichen Vorgehen nicht verschlechtert wird.

Aufgrund des erfindungsgemäßen Vorgehens können mit modernen Sensoren bewegte Objekte und insbesondere Fußgänger auch bei größeren Abständen oder Distanzen, zum Beispiel von bis zu 5 m, noch gut detektiert und nach verfolgt werden.

Das erfindungsgemäße Verfahren ist auch in der Lage, eine hohe oder gesteigerte Messempfindlichkeit oder Sensitivität moderner Sensorentwicklungen so zu berücksichtigen, dass eine bisher bekannte Störanfälligkeit, insbesondere bei dynamischen Objekten, vermieden werden kann.

Andererseits ist es erfindungsgemäß möglich, Echos zu sich bewegenden Objekten und insbesondere Fußgängerechos von den Echos der restlichen Umgebung in geeigneter Weise zu isolieren.

Auch ist es erfindungsgemäß möglich, bei einer gegebenenfalls vorliegenden mangelnden Positionsauflösung der Ultraschallsensoren die richtigen Reflexe unterschiedlicher Sensoren miteinander in Bezug zu setzen.

Ferner ist es möglich, eine aktuelle Position jederzeit richtig darzustellen, gegebenenfalls unter Durchführung einer Vorhersage oder Prädiktion sowie einer Schätzung der Bewegungsrichtung und/oder einer Bewegungsgeschwindigkeit des sich bewegenden Objekts.

Grundlage für das neue Bewertungsverfahren gemäß dem oben erwähnten Konzept (ii) ist dabei das speziell entwickelte Echotracingverfahren gemäß dem oben erwähnten Konzept (i).

Eine Aufgabe des Konzepts (i) des Echotracingverfahrens besteht darin, Echoverläufe zu einem Objekt zuverlässig aus den sonstigen oder restlichen Reflexionen zu extrahieren.

Dadurch stehen bei der Objektdetektion oder Objektgenerierung störbefreite zeitliche Reflexionsverläufe zur Verfügung.

Im Zusammenhang mit dem Echotracingverfahren liefern für die Umfelderfassung modellbasierte Ansätze für statische Objekte aber auch für bewegte Objekte bereits gute Ergebnisse.

Für eine verbesserte Performance im Hinblick auf dynamische Objekten wird zusätzlich oder alternativ noch ein Ansatz auf der Grundlage von Korrelationen insbesondere unter Verwendung digitaler Kalmanfilter vorgeschlagen.

Beide Modelle können miteinander kombiniert werden.

Durch das erfindungsgemäße Verwenden des Echotracingverfahrens werden Störungen detektiert und isoliert, sodass die Reflexionsverläufe dynamischer Objekte 3 besser erkannt und verfolgt werden können.

Für die Zuordnung einzelner Gruppen 35 oder Traces 37 zu einem Objekt 3 kann ein Laterationsansatz verwendet werden.

Über die zeitliche Entwicklung der Gruppen 35 oder Traces 37, also über die Tracehistorie, kann eine einfache Zuordnung zeitlich aufeinanderfolgender Echos zum selben Objekt erfolgen.

Dabei wird jeder Gruppe 35 oder jeder Trace 37 eine eindeutige Identitätsmarke oder ID zugewiesen. In einem nächsten Sendezyklus wird zunächst versucht, aus den Gruppen 35 oder Traces 37 mit denselben Identitätsmarken oder IDs entsprechende Objekte 3 zu detektieren oder im Modell zu bilden, die schon im vorangehenden Sendezyklus erfolgreich waren. Dadurch sind keine stark ausgedehnten oder großen Fangfenster 39 mehr notwendig und die Stabilität der Objektdetektion wird nicht beeinflusst.

Über den zeitlichen Verlauf oder die Historie von Schnittpunkten und einen Tiefpassfilter können ein Bewegungsvektor und eine Bewegungsgeschwindigkeit in Bezug auf das bewegte Objekt 3 ermittelt werden.

Darüber erfolgt dann wiederum eine Vorhersage oder Prädiktion.

Performance

Für das erfindungsgemäße Verfahren sind zum Beispiel Objekte 3 und insbesondere Fußgänger mit Geschwindigkeiten oberhalb von 7 km/h detektierbar und nachverfolgbar, insbesondere im Bereich von 10 km/h bis 15 km/h. Eine Einschränkung im Hinblick auf statische Objekte 3 wird mit dem erfindungsgemäßen Verfahren vermieden.

Damit kann auf der Schnittstelle für ein entsprechendes Fahr- und/oder Parkassistenzsystem, dem HMI, ein kontinuierlicher Verlauf bewegter Objekte 3 radial und/oder lateral dargestellt werden, wobei insbesondere auch der aktuelle Abstand zum Objekt 3 anzeigbar ist.

Es ergeben sich erfindungsgemäß unter anderem folgende Anwendungsfälle und Vorteile:

(I) Eine verbesserte Erkennung von Fußgänger ist möglich mit entsprechenden Warnungen vor Fußgängern, insbesondere im Zusammenhang mit NCAP, APA oder dergleichen.

(II) Es kann eine Unterdrückung von Falschwarnungen erfolgen, zum Beispiel bei einem Start nach Halt an einer roten Ampel: Beim Halten an einer Ampel oder dergleichen, nämlich hinter einem anderen Fahrzeug, werden zunächst sehr plausible Objekte 3 detektiert und im Modell gebildet. Beim Losfahren müssen diese Objekte 3 im Modell sehr schnell gelöscht werden, wodurch es bei herkömmlichen Ultraschalldetektionssystemen zu Problemen kommt. Mit dem erfindungsgemäßen Erkennen eines vorrausfahrenden Fahrzeugs als dynamisches Objekt 3 wird dieses Problem gelöst.

(III) Es kann eine Unterdrückung von Falschwarnungen bei Kolonnenfahrt erfolgen: Auch hier kann es zu Falschwarnungen kommen, die mit dem erfindungsgemäßen Erkennen von dynamischen Objekten 3 leicht unterdrückt werden könnten.

Wie oben bereits dargelegt wurde, eröffnen sich bei dem erfindungsgemäßen Betriebsverfahren für ein Ultraschallsensorsystem 10 besondere Vorteile, wenn das beschriebene Echotracingverfahren mit Aspekten der Detektion dynamischer Objekte und insbesondere von Fußgängern kombiniert wird.

Dabei kann das Vorgehen des eigentlichen Detektierens dynamischer Objekte 3, insbesondere bei der Detektion von Fußgängern, unter anderem folgende Schritte einzeln oder in Kombination miteinander aufweisen:

(1) Die eigentliche Objekterkennung kann über ein Paar Ultraschallsensoren 11, 12, welche auch als Sensorpaar aufgefasst werden können, über ein Laterationsverfahren erfolgen. Dabei werden zum Beispiel zwei Direktechos aus zwei benachbarten Sensoren 11, 12 in Bezug gesetzt. Von Direktecho wird dabei gesprochen, wenn ein und derselbe Sensor 11, 12 sendet und sein "eigenes" Echo 32 empfängt, also dasjenige Echosignal 32, welches durch das von ihm ausgesandten Ultraschallsignal 20 als Sendesignal erzeugt wurde. Über ein zusätzliches Kreuzecho - nämlich im Zusammenhang mit einem Vorgang, bei welchem Sender und Empfänger unterschiedlich sind - des Sensorpaares kann eine Typklassifikation (Wand oder Punkt) erfolgen und die Robustheit erhöht werden.

(2) Jedes detektierte oder im Modell erzeugte Objekt 3 erhält ein Fangfenster 39, in dem mit den nachfolgenden Ultraschallsignalen 20 bzw. deren Pulsen 22 nach Objekten 3 gesucht wird, die insbesondere dem bereits vorhandenen Objekt 3 zugeordnet werden können, zum Beispiel im Zusammenhang mit einer mit einer Trace 37 im Zusammenhang stehenden Gruppe 35.

(3) Die Eigenbewegung des eigenen Fahrzeugs 1 bzw. des zu Grunde liegenden Ultraschallsensorsystems 10 wird über ein Fahrzeugmodel kompensiert.

(4) Es werden drei Echosignale 30 oder Ultraschallechos 32 zu Grunde gelegt, nämlich ein Direktecho eines ersten, zum Beispiel rechten Sensors 12, ein Direktecho eines zweiten, zum Beispiel linken Sensors 11 und ein Kreuzecho. Zu jedem der Echos 32 wird eine Gruppe 35 oder eine Trace 37 erzeugt.

(5) Wird ein Objekt 3 detektiert oder im Modell gebildet, so wird im nächsten Zeitschritt in den entsprechenden Echolisten zunächst nach denselben Gruppen 35 oder denselben Traces 37 und den entsprechenden Identitätsmarken oder IDs gesucht, welche das vorangehende Objekt 3 erzeugt haben.

(6) Sind diese vorhanden, so wird versucht, dieselbe Objekthypothese (Wand oder Punkt) erneut zu erzeugen.

(7) Bei Erfolg wird über den Abstand der im Modell erzeugten Objekte 3 ermittelt, ob sich das Objekt 3 bewegt. Es werden ein Bewegungsvektor sowie eine Bewegungsgeschwindigkeit ermittelt.

(8) Die Bewegungsinformationen können über einen Tiefpassfilter über die Zeit stabilisiert werden.

(9) Mit den Bewegungsinformationen werden die Fangfenster 39 zu den Objekten 3 verschoben, um auch detektierte oder im Modell erzeugte Objekte 3 zu benachbarten Sensorgruppen zuordnen zu können.

(10) Wird auf diese Weise ein Objekt 3 erneut verifiziert, so werden auch die zugehörigen Gruppe 35 oder Trace 37 und/oder die dazugehörigen Identitätsmarken oder IDs abgespeichert und können für die weitere Verifikation benutzt werden.

(11) Die Größen der Fangfenster 39 hängen von der Güte der Verifikationen ab. Wird Position stets sehr genau bestätigt, so kann die Weite des Fangfensters auf einen kleinen Wert gesetzt werden. Streut dagegen die Position, bleibt das Fangfenster 39 groß.

Mit der Entwicklung moderner Ultraschalltechnologie entstehen zunehmend sensitive Sensoren mit großer Reichweite, mit denen auch schlecht reflektierende Objekte zuverlässig erkannt werden können.
Im Wesentlichen geht es bei modernen Entwicklungen um Fußgänger, um Objekte in Bewegung im Allgemeinen, um Objekte mit sehr geringem Durchmesser oder Abmessungen im Allgemeinen und um kleine Objekte in der Nähe von sehr großen gut reflektierenden Objekten. Diese können auch bei starken äußeren Einflüssen wie Fremdschall oder Bodenclutter mit modernen Sensortechnologien an sich noch zuverlässig erkannt werden.
Zudem sind moderne Ultraschallsensoren in der Lage, bis zu 20 Reflexionen in einem Sendezyklus zu liefern. Ein negativer, aber in Kauf genommener Nebeneffekt, ist die hohe Rate an Geisterechos, die auf der Softwareebene wieder herausgefiltert werden müssen.
Herkömmliche Ultraschallsysteme filtern Echos im Sensor anhand von festen Intensität- oder Amplitudenschwellwerten. Diese Schwellenwerte sind so eingestellt, dass auch auf Schlechtwegstrecken die Zahl der Störechos ausreichend gering ist.
Dennoch wird auch bei diesen herkömmlichen Systemen vorausgesetzt, dass ein Objekt über mehrere Messungen hintereinander erkannt wird. Dies erfolgt konkret dadurch, dass mehrere Messungen in Folge Distanzwerte liefern, die einander ähnlich genug sind.
In diesen herkömmlichen Systemen kommen allerdings einfache Prinzipien zur Anwendung, die nicht den Verlauf einer längeren Echohistorie berücksichtigen und damit vorwiegend für statische Situationen ohne bewegte Objekte geeignet sind.
Ein zentrales Element der vorliegenden Erfindung ist die Ausgestaltung einer Ultraschallsensoranordnung 10 - insbesondere im Zusammenhang mit einer vorgesehenen Filterkette - ein neues entwickeltes Filterverfahren, welches auf die eingehenden und empfangenen Echosignale 30 und deren Ultraschallechos 32 sowie neben Echos 36 angewandt wird.
Dieses neue Filterverfahren wird nachfolgend auch als Echotracing bezeichnet, womit Ausgestaltungsformen des erfindungsgemäßen Betriebsverfahrens für ein Ultraschallsensorsystem 10 umschrieben werden.

Das Echotracing ist als Filterverfahren dazu ausgebildet, im Echosignal 30 oder in einer Abfolge von Echosignalen 30 zu zeitlich aufeinanderfolgenden Sendepulsen 22 eines ausgesandten Ultraschallsignals 20 als Sendesignal nach zeitlichen Verläufen im Echobild, also der zeitlichen Abfolge der einlaufenden Ultraschallechos 32 in Bezug aufeinander, zu suchen.

Erfindungsgemäß ist das Verfahren in der Lage, Echosignale 36 zu einzelnen Störungen 34 von Ultraschallechos 32 zu stabilen Detektionen eines Objektes 3 in einer Umgebung 2 zu unterscheiden.

Dies ist besonders wichtig, da z.B. ein Pfosten als Objekt 3 im Nahbereich der Umgebung zum Beispiel zwischen zwei Sensoren oder Ultraschallempfängern 12 nur noch sehr kleine Amplituden aufweist und sonst nicht mehr von einer Störung 34 unterscheidbar wäre.

Zusätzlich können die durch das Echotracing gelieferten Reflexionsverläufe die Basis vieler neu entwickelter Funktionen der Umfelderkennung bilden, z.B. im Hinblick auf das Erkennen dynamischer also bewegter Objekte und/oder eine Höhenklassifikation.

Zusätzlich erleichtert die Bewertung von Reflexionsverläufen im Sinne des erfindungsgemäßen Echotracings im Gegensatz zur Bewertung von zeitlich isolierten Einzelreflexionen die Echozuordnung im Verfahren der Lateration der Objektiokalisierung, wodurch eine wesentliche Verbesserung der Objektbildung erreicht wird.

Nachfolgend werden mit anderen Worten Aspekte des Kerns und der Vorteile der Erfindung beschrieben:

Das Echotracingverfahren als erfindungsgemäßes Betriebsverfahren für ein Ultraschallsensorsystem 10 dient dazu, über eine Sequenz zeitlich aufeinanderfolgender Messungen Echos 32 zu identifizieren, die von demselben Objekt 3 stammen und diese zu gruppieren, also zu einer zeitlich übergreifenden Gruppe 35 zwischen zeitlich aufeinanderfolgenden Spuren 31 im Echosignal 30 zusammenzufassen.

Dies kann insbesondere durch das Auffinden und bewerten einer Gesetzmäßigkeit und/oder Gleichmäßigkeit der Distanzfolge - also der Folge aufeinanderfolgender Distanzwerte - bewertet werden, die sich zum Beispiel auch linear oder quadratisch verhalten können.

Des Weiteren ist es erfindungsgemäß möglich, die Distanzfolge alternativ oder zusätzlich anhand von weiteren Kriterien zu bewerten.

Dazu können die Ähnlichkeit in der Reflektivität oder der Korrelation der empfangenen Echos herangezogen werden.

Sind nun auf diese Weise Echos 32 zu einer Gruppe 35 zusammengefasst oder gruppiert, dann können Echos 36, die keiner Gruppe 35 zugeordnet werden konnten, zum Beispiel als von einer Störung 34 stammend gelöscht werden.

Insbesondere statistisch verteilte Störechos, z.B. Bodenclutter, Rauschen, Störer von Fremdsystemen und anderen externen, akustischen Quellen, weisen keine Gesetz-, Regel- oder Gleichmäßigkeit in ihrem historischen Verlauf auf und können auf diese Weise zuverlässig herausgefiltert werden.

Ein weiterer Vorteil der Erfindung ist die Möglichkeit, sehr schwache Reflexe als Ultraschallechos 32 auszuwerten, indem sie genau dann zur Bildung und Bewertung von Objekten 3 herangezogen werden, wenn ausreichend viele in einer Sequenz von Messungen - also zu unterschiedlichen Sendepulsen 22 des zu Grunde liegenden Ultraschallsignals 20 - erkannt wurden, die einer sendepulsübergreifenden Gruppe 35 oder Trace 37 zugeordnet werden können.

Das ist insbesondere bei Fußgängern als Objekten 3 wesentlich, die üblicherweise nur wenig Schallenergie reflektieren.

Ferner ist erfindungsgemäß die Möglichkeit vorteilhaft, bewegte Objekte 3 auch bis zu einer relativ hohen Eigengeschwindigkeit stabil zu verfolgen und Bewegungsvektoren abzuleiten. Auch das ist wesentlich für Fußgänger als Objekte 3, weil diese mobil sind.

Ferner ergibt sich erfindungsgemäß die Möglichkeit, über sich kreuzende Echoverläufe zu erkennen, wenn sich die Reflexionen zweier Objekte 3 auf demselben oder einem ähnlichen Abstandswert oder Distanzwert 33 überlagern.

Ein weiterer erfindungsgemäß erreichter Vorteil ist die Verbesserung der Robustheit der Bildung oder Detektion von Objekten 3 dadurch, dass eine sendepulsübergreifende Zuordnung von Echos 32 zu Gruppen 35 oder Traces 37 zur Beschreibung einer Koinzidenz ausgewendet werden.

Dies kann auch als Kriterium dafür dienen, welche Echodaten miteinander für eine Triangulation oder Lateration kombiniert werden.

Konkret kann dann, wenn in einem Zeitschritt t die Trace ti zu einer Gruppe 35 von einem Sensor i mit der Trace tj zu einer Gruppe 35 von Sensor j trianguliert wurde, in einem späteren Zeitschritt t+1 davon ausgegangen werden, dass immer noch dieselben Traces 37 und die entsprechenden Gruppen 35 miteinander kombiniert werden können.

Es existieren vielfältige Lösungsmöglichkeiten für das erfindungsgemäße Echotracing im Sinne eines erfindungsgemäßen Betriebsverfahrens für ein Ultraschallsensorsystem 10.

Für das Tracing gibt es unter anderem zwei Alternativansätze.

Der erste Ansatz bildet das Tracing mittels eines Modells der Reflexionsverläufe, im Sinne von zeitlichen Verläufen von Ultraschallechos 32 in Echosignalen 30 und deren Spur 31 in sendepulsübergreifender Weise.

Bei statischer Umgebung und sich bewegendem eigenen Fahrzeug 1 kommen einzeln oder in Kombination zwei charakteristische Detektionsverläufe vor.

Zum einen treten lineare Verläufe bezüglich Fahrzeugbewegung auf, und zwar gemäß der oben bereits erwähnten Beziehung (I)

$$\Delta d = a \cdot \Delta s, \qquad\qquad (I)$$

wobei d die gemessene Distanz und s die gefahrene Wegstrecke bezeichnen.

Ferner ist ein im Hinblick auf die Fahrzeugbewegung quadratischer Verlauf gemäß der oben bereits erwähnten Beziehung (II) denkbar, der vor allem bei Vorbeifahrt an punktförmigen Objekten relevant ist:

$$d^2 = \left(s - s_0\right)^2 + d_0^{\,2}, \qquad\qquad (II)$$

wobei mit d die gemessene Distanz, mit s die gefahrene Wegstrecke, $s_0$ die gefahrene Wegstrecke zum Zeitpunkt des Passierens des Objektes 3 und do den minimalen Abstand zum Objekt 3 bezeichnen.

Das erfindungsgemäße Tracingverfahren sucht nun nach Echoverläufen, die auf diese Modelle oder eine Kombination davon passen.

Dabei wird zu jedem gemessenen Echo 32, 36 im nächsten Sendezyklus nach Echos in einem gewissen Fangfenster 39 zur letzten Detektion gesucht.

Das Fangfenster 39 wird initial nur durch die Eigengeschwindigkeit beeinflusst. Ab der dritten Detektion, also ab dem dritten Sendepuls 22 im Sendesignal 20, wird nun geprüft, zu welchem Modell der sendepulsübergreifende Verlauf der Ultraschallechos 32 besser passt.

Mit diesem Modell wird dann vorausprädiziert, also ein vorhergesagtes oder zukünftiges Ultraschallecho 38 bestimmt. Das vorhergesagte Ultraschallecho 38 wird dann mit einem tatsächlich einlaufenden Ultraschallecho 32 und dessen Lage verglichen.

Vor jeder weiteren Prädiktion wird erneut das Modell geprüft. Die Größe des Fangfensters 39 hängt nun von der Modellabweichung der Echoverläufe und der Abweichung zwischen letzter Prädiktion und Messung ab.

Bei einem zusätzlichen oder alternativen Ansatz erfolgt das erfindungsgemäße Tracing mittels eines diskreten Kalmanfilters.

Dem Kalmanfilter liegt ein dreidimensionales Zustandsmodell zu Grunde. Dieses dreidimensionale Zustandsmodell weist die drei Systemzustände

$X_1$ : gemessene Distanz
$X_2$ : Änderungsrate der Distanz d oder des Distanzwerts 33
$X_3$ : Änderungsbeschleunigung der Distanz d oder des Distanzwert 33

auf.

Die Beschleunigung wird als konstant angenommen. Dabei wird eine Beobachtung von Kurven oder Bewegungen mit Kurven mit konstantem Radius gewährleistet.

Abweichungen müssen durch die Messkorrektur kompensiert werden.

Für das diskrete Zustandsmodell ergeben sich folgende Zusammenhänge (III) bis (VI):

$$X_k = F_k \cdot X_{k-1} \qquad\qquad (III)$$

$$Z_k = H \cdot X_k \qquad\qquad (IV)$$

$$F = \begin{bmatrix} 1 & dt & 0 \\ 0 & 1 & dt \\ 0 & 0 & 1 \end{bmatrix} \qquad\qquad (V)$$

$$H = \begin{bmatrix} 1 & 0 & 0 \end{bmatrix} \qquad \text{(VI)}$$

Für die Prädiktion der nächsten Messwerte wird nun ein diskretes Kalmanfilter verwendet. Die Fangfenster 39 zum Finden der Messwerte, die zur Aktualisierung der Gruppen 35 oder Traces 37 herangezogen werden, werden gemäß den Modellen für die Reflexionsverläufe auf der Grundlage der oben beschriebenen Relationen (I) und/oder (II) berechnet.

Diese und weitere Aspekte der vorliegenden Erfindung werden anhand der nachstehenden Darlegungen weiter erläutert:

Das erfindungsgemäße Betriebsverfahren für ein Ultraschallsensorsystem 10 umfasst - wie oben bereits dargelegt wurde - als eine Komponente ein Echotracingverfahren, das kurz auch als Tracingverfahren oder Echotracing bezeichnet werden kann.

Bei einer Ausführungsform kann das Echotracingverfahren als solches zum Beispiel folgende Verfahrensschritte (1) bis (5) einzeln oder in Kombination miteinander aufweisen:

(1) Jedes empfangene Echo 32, 36 öffnet eine Gruppe 35 oder eine Trace 37.

(2) Im nächsten Schuss, also einer Messung zu einem zeitlich direkt nachfolgenden Sendepuls 22 wird unter Einbeziehung der Fahrzeugeigenbewegung in einem Standardfangfenster 39 nach möglichen Echos 32 zu einem Objekt 3 gesucht, die den vorherigen Schuss, also die Messung zu einem vorangehenden Sendepuls 22 hinsichtlich der dort detektierten Echos 32 zu einem Objekt 3 bestätigen können. Dabei wird beim Vorliegen einer Mehrzahl möglicher Kandidaten dasjenige Echo 32 ausgesucht, welches dem vorangehenden am nächsten kommt.

(3) Enthält eine Gruppe 35 oder eine Trace 37 mindestens zwei Echos 32 als Kandidaten, so wird gemäß der obigen Beziehung (I) linear oder ab drei Kandidaten gemäß der obigen Beziehung (II) auch quadratisch prädiziert oder im Kalmanansatz über den Filter entschieden.

(4) Um den vorhergesagten oder prädizierten Wert 38 herum wird ein Fangfenster 39 gelegt. In Echolisten der neu gemessenen Signale wird nach Echos 32 im Fangfenster 39 gesucht. Gibt es mehrere Treffer im Sinne von möglichen Kandidaten, so wird dasjenige Echo 32 mit der geringsten Abweichung zum prädizierten Wert 38 gewählt.

(5) Die Größe oder Weite des Fangfensters 39 kann über einen Tiefpass an die mittlere Abweichung zwischen Prädiktion 38 und konkretem Messwert im Sinne eines Ultraschallechos 32 zu einem Objekt 3 angepasst werden.

**Patentansprüche**

1. Betriebsverfahren für ein Ultraschallsensorsystem (10) zur Erfassung bewegter Objekte (3) in einer Umgebung (2), insbesondere eines Fahrzeugs (1), mittels Ultraschall,
   mit den Schritten:

   - Aussenden von Ultraschallsignalen (20) zu einer Mehrzahl aufeinanderfolgender Zeitpunkte und
   - Empfangen von - insbesondere an einem oder an mehreren Objekten (3) in der Umgebung (2) - reflektierten Ultraschallechosignalen (30),

   wobei:

   - einem - zu einem ausgesandten Ultraschallsignal (20) - empfangenen Ultraschallechosignal (30) eine Spur (31) zugeordnet wird, insbesondere eine gemessene Schallintensität als Funktion der Zeit,
   - in einer jeweiligen Spur (31) zu einem jeweils vorhandenen Ultraschallecho (32) ein Distanzwert (33) bestimmt und zugeordnet wird,
   - Ultraschallechos (32) in Spuren (31) zu einer Mehrzahl zeitlich aufeinanderfolgender Ultraschallsignale (20) zu einer Gruppe (35) zusammengefasst werden, falls die Distanzwerte (33) der Ultraschallechos (32) einer vorbestimmten Gesetzmäßigkeit folgen, und
   - Ultraschallechos (36), die zu keiner Gruppe (35) gehören, als Störung (34) klassifiziert werden.

2. Betriebsverfahren nach Anspruch 1, bei welchem

  - Direktechos (41, 42, 51, 52) von mindestens zwei Ultraschallsendeempfängern (10-1, 10-2) eines zu Grunde liegenden Ultraschallsensorsystems (10) bei der Erkennung von Objekten (3) verwendet werden und/oder
  - ein oder mehrere Kreuzechos (62) von mindestens zwei Ultraschallsendeempfängern (10-1, 10-2) des zu Grunde liegenden Ultraschallsensorsystems (10) bei der Erkennung von Objekten (3) verwendet werden.

3. Betriebsverfahren nach einem der vorangehenden Ansprüche, bei welchem

  - einer jeweiligen Gruppe (35) ein Objekt (3) zugeordnet wird,
  - einer jeweiligen Gruppe (35) ein Fangfenster (39) zugeordnet wird und
  - in einem jeweiligen Fangfenster (39) etwaig nachfolgend eingehende Ultraschallechos (32) detektiert und der jeweiligen Gruppe (35) und mithin dem jeweils zugeordneten Objekt (3) zugeordnet werden.

4. Betriebsverfahren nach einem der vorangehenden Ansprüche,
bei welchem zu jeweils einem Direktecho (41, 42, 51, 52) und einem Kreuzecho (62) eines Paares von Ultraschallsendeempfängern (10-1, 10-2) jeweils eine Gruppe (35) erzeugt wird, welcher insbesondere eine Identitätsmarke zugeordnet wird.

5. Betriebsverfahren nach Anspruch 4,
bei welchem beim Empfangen eines neuen Ultraschallechos (32) und beim Neudetektieren eines Objekts (3) in einer vorhandenen Gruppe (35) nach Übereinstimmung und insbesondere nach einer übereinstimmenden Identitätsmarke gesucht wird.

6. Betriebsverfahren nach Anspruch 5, bei welchen

  - aus einer Kombination von Direktechos (41, 42, 51, 52) mit einem Kreuzecho (62) eines gegebenen Paares von Ultraschallsendeempfängern (10-1, 10-2) eine Typklassifikation hinsichtlich des Vorliegens einer Wand oder eines Punkts durchgeführt wird und insbesondere
  - beim Vorliegen einer übereinstimmenden Identitätsmarke beim Empfangen eines neuen Ultraschallechos (32) und dem Neudetektieren eines Objekts (3) in einer Gruppe (35) eine Typklassifikation hinsichtlich des Vorliegens einer Wand oder eines Punkts erneut durchgeführt wird.

7. Betriebsverfahren nach Anspruch 6, bei welchem

  - aus Daten einer Typklassifikation hinsichtlich des Vorliegens einer Wand oder eines Punkts und/oder aus den Daten einer erneuten Durchführung einer Typklassifikation Bewegungsinformation zu einem Bewegungszustand eines Objekts (3) ermittelt wird, insbesondere durch Erzeugen eines Bewegungsvektors und/oder eines Werts einer Bewegungsgeschwindigkeit,
  - wobei die Bewegungsinformation zeitlich aufeinanderfolgend erneut erzeugt und insbesondere unter Verwendung einer Tiefpassfiltereinheit zeitlich stabilisiert wird.

8. Betriebsverfahren nach einem der vorangehenden Ansprüche, bei welchem

  - aus empfangenen Echosignalen (30) Bewegungsinformation zu einem Bewegungszustand eines detektierten Objekts (3) ermittelt wird und
  - auf der Grundlage der Bewegungsinformation etwaige Fangfenster (39) zu Objekten (3) in Lage und/oder Weite angepasst werden.

9. Betriebsverfahren nach einem der vorangehenden Ansprüche, bei welchem

  - aus empfangenen Echosignalen (30) Lage und/oder Bewegungsinformation zu einem Bewegungszustand eines bereits detektierten Objekts (3) verifiziert werden und
  - in Abhängigkeit vom Grad der Verifikation Lage und/oder Weite eines jeweiligen Fangfensters (39) angepasst werden.

10. Steuereinrichtung (15) zum Steuern des Betriebs eines Ultraschallsensorsystems (10), insbesondere zur Erfassung bewegter Objekte in einer Umgebung (2), insbesondere eines Fahrzeugs (1), mittels Ultraschall, welches zur Ausführung eines Betriebsverfahrens nach einem der vorangehenden Ansprüche ausgebildet ist.

11. Ultraschallsensorsystem (10), insbesondere zur Erfassung bewegter Objekte in einer Umgebung (2) mittels Ultraschall, mit:

   - einem Ultraschallsender (11),
   - einem Ultraschallempfänger (12) und
   - einer Steuereinrichtung (15) nach Anspruch 10.

12. Fahrzeug (1), insbesondere Personenkraftwagen, welches mit einem Ultraschallsensorsystem (10) nach Anspruch 11 ausgebildet ist.

## Fig. 1A

## Fig. 1B

Fig. 2

# Fig. 3

# Fig. 4

**Europäisches Patentamt**
**European Patent Office**
**Office européen des brevets**

# EUROPÄISCHER RECHERCHENBERICHT

Nummer der Anmeldung

EP 17 18 6666

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/054430 A1 (PALUSZEK MICHAEL A [US] ET AL) 25. Februar 2016 (2016-02-25) | 1-3,8-12 | INV. G01S15/93 |
| Y | * Absätze [0018] - [0023]; Anspruch 5; Abbildung 1 * | 2,4-7 | G01S7/539 G01S15/58 |
| | * Absätze [0067], [0068]; Abbildung 4 * | | G01S15/66 |
| | ----- | | G01S15/87 |
| X,P | EP 3 156 820 A1 (VALEO SCHALTER & SENSOREN GMBH [DE]) 19. April 2017 (2017-04-19) | 1,3,8-12 | |
| | * Absätze [0007], [0008], [0009], [0109] - [0187]; Abbildungen 6, 7 * | | |
| | ----- | | |
| Y | US 2016/116590 A1 (FUKUMAN MASUMI [JP] ET AL) 28. April 2016 (2016-04-28) | 2,4-7 | |
| | * Absätze [0033], [0043], [0044], [0051], [0076]; Abbildungen 1-3 * | | |
| | ----- | | |
| Y | US 2016/116586 A1 (FUKUMAN MASUMI [JP] ET AL) 28. April 2016 (2016-04-28) | 2,4-7 | |
| | * Absätze [0039], [0046], [0062]; Ansprüche 1, 4; Abbildungen 1-4, 7, 8 * | | |
| | ----- | | RECHERCHIERTE SACHGEBIETE (IPC) |
| Y | DE 10 2015 220329 A1 (TOYOTA MOTOR CO LTD [JP]; DENSO CORP [JP]) 28. April 2016 (2016-04-28) | 2,4-7 | G01S |
| | * Absätze [0003], [0008], [0044] - [0055]; Abbildung 8 * | | |
| | ----- | | |

Der vorliegende Recherchenbericht wurde für alle Patentansprüche erstellt

| Recherchenort | Abschlußdatum der Recherche | Prüfer |
|---|---|---|
| München | 8. Februar 2018 | Schmelz, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 17 18 6666

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2018

| Im Recherchenbericht angeführtes Patentdokument | Datum der Veröffentlichung | Mitglied(er) der Patentfamilie | Datum der Veröffentlichung |
|---|---|---|---|
| US 2016054430 A1 | 25-02-2016 | KEINE | |
| EP 3156820 A1 | 19-04-2017 | DE 102015117379 A1 <br> EP 3156820 A1 | 13-04-2017 <br> 19-04-2017 |
| US 2016116590 A1 | 28-04-2016 | JP 2016080647 A <br> US 2016116590 A1 | 16-05-2016 <br> 28-04-2016 |
| US 2016116586 A1 | 28-04-2016 | JP 2016080642 A <br> US 2016116586 A1 | 16-05-2016 <br> 28-04-2016 |
| DE 102015220329 A1 | 28-04-2016 | CN 105549017 A <br> DE 102015220329 A1 <br> JP 2016080644 A <br> US 2016116585 A1 | 04-05-2016 <br> 28-04-2016 <br> 16-05-2016 <br> 28-04-2016 |

EPO FORM P0461

Für nähere Einzelheiten zu diesem Anhang : siehe Amtsblatt des Europäischen Patentamts, Nr.12/82